Europäisches Patentamt

European Patent Office

Office européen des brevets

(11) Veröffentlichungsnummer: **0 285 556 B1**

(19)

## (12) EUROPÄISCHE PATENTSCHRIFT

(45) Veröffentlichungstag der Patentschrift: **14.07.93**

(21) Anmeldenummer: **88810139.1**

(22) Anmeldetag: **07.03.88**

(51) Int. Cl.⁵: **G01R 31/00**, F02D 41/38

(54) **Verfahren zum Einstellen des dynamischen Laufverhaltens eines Dieselmotors mit elektronischem Drehzahlregler und Vorrichtung zur Durchführung des Verfahrens.**

(30) Priorität: **19.03.87 CH 1038/87**

(43) Veröffentlichungstag der Anmeldung:
**05.10.88 Patentblatt 88/40**

(45) Bekanntmachung des Hinweises auf die
Patenterteilung:
**14.07.93 Patentblatt 93/28**

(84) Benannte Vertragsstaaten:
**CH DE FR GB IT LI NL SE**

(56) Entgegenhaltungen:
**GB-A- 2 055 214**
**GB-A- 2 118 325**
**GB-A- 2 173 007**

**INTERNATIONAL CONFERENCE ON VEHICLE
CONDITION MONITORING AND FAULT DIA-
GNOSIS, London, 6.-7. März 1985, Seiten
15-24, Offenlegung C33/85, IMechE, London,
GB; J.W. FREESTONE et al.: "The diagnosis
of cylinder power faults in diesel engines by
flywheel speed measurement"**

(73) Patentinhaber: **GEBRÜDER SULZER AKTIENGE-
SELLSCHAFT
Zürcherstrasse 9
CH-8401 Winterthur(CH)**

(72) Erfinder: **Siegl, Walter
Federnstrasse 4
CH-8052 Zürich(CH)**

**Beschreibung**

Die vorliegende Erfindung bezieht sich auf ein Verfahren zum Einstellen des dynamischen Laufverhaltens eines einen elektronischen Drehzahlregler enthaltenden Dieselmotors durch die Regelung der Einspritzmenge der Kraftstoff-Einspritzpumpe mit elektronischem Drehzahlregler, sowie um eine Dieselmotor-Simulationsvorrichtung zum Durchführen des Verfahrens.

Bisher wurde das dynamische Laufverhalten von Dieselmotoren und insbesondere auch dasjenige von Grossdieselmotoren mit elektronischer Drehzahlregelung am Motor selbst vorgenommen. Die Einstellung des Drehzahlreglers beispielsweise an einem Grossdieselmotor selbst ist sehr zeitaufwendig und kann ohne weiteres einen ganzen Arbeitstag oder sogar mehr Zeit in Anspruch nehmen. Um die für den Motor im Betrieb auftretenden Lasten und Lastwechsel erzeugen zu können, sind besondere Zusatzeinrichtungen, wie z.B. Wasserbremsen oder andere Drehmomentbremsen notwendig, für deren Bereitstellung ebenfalls Stunden notwendig sein können. Der Versuchsbetrieb mit einem Grossdieselmotor verursacht hohe Kosten für Treibstoff und für das für den Testbetrieb erforderliche hochqualifizierte Personal von ohne weiteres mehreren tausend Franken pro Betriebsstunde.

Die Publikation "International Conference on Vehicle Condition Monitoring and Fault Diagnosis" und darin der Beitrag "The diagnosis of cylinder power faults in diesel engines by flywheel speed measurement" (S. 15 bis 24) beschreibt eine Technik zum Abschätzen des Leistungsbeitrags jedes Zylinders in einem mehrzylindrigen Dieselmotor ohne den zu überprüfenden Motor aus dem Fahrzeug ausbauen zu müssen. Mit magnetischen Sensoren werden die Geschwindigkeits-Daten vom laufenden, eingebauten, zu diagnostizierenden Motor abgeleitet und mit Hilfe eines Rechners analysiert. Diese Dreh-Geschwindigkeitsdaten, insbesondere die Fluktuationdieser Daten, die am eingebauten Motor gemessen werden, bilden die Basis für das Berechnen der Drehmoment-Änderungen. Aus den Drehmomentsänderungen wird rechnerisch auf die Leistungsbeiträge der einzelnen Zylinder geschlossen.

Beim Verfahren nach der vorliegenden Erfindung erfolgt das Einstellen des Drehzahl-Reglers mit Hilfe eines elektronisch simulierten Motors.

Das erfindungsgemässe Verfahren ist dadurch gekennzeichnet, dass zum Einstellen des elektronischen Drehzahlreglers dieser an eine elektronische Simulationsschaltung, mit Eingabe- und Ausgabekanälen angeschlossen wird, welche das Laufverhalten des Dieselmotors in Form von elektrischen Signalen simuliert, wobei über Eingabekanäle charakteristische, den Lastwechseln und Störungen entsprechende, elektrische Signale sowie die Reglersignale für die Einstellung der Kraftstoff-Einspritzpumpe eingegeben werden und über einen Ausgangskanal der Schaltung, der Drehzahl des in der elektronischen Schaltung simulierten Dieselmotors entsprechende elektrische Signale an den Drehzahlregler ausgegeben werden, wobei die Simulationsschaltung mit dem elektronischen Drehzahlregler einen geschlossenen Regelkreis bildet, und dass der derart mit dem Simulator eingestellte elektronische Drehzahlregler an den Dieselmotor angeschlossen wird. Das erfindungsgemässe Verfahren löst die Aufgabe, die Einstellung des dynamischen Laufverhaltens eines Dieselmotors zu vereinfachen und zeitlich abzukürzen. Die Vorrichtung für die Durchführung des erfindungsgemässen Verfahrens ist für die Einstellung des dynamischen Laufverhaltens eines Dieselmotors besonders geeignet. Die abhängigen Ansprüche beziehen sich auf besonders vorteilhafte Weiterbildungen der Erfindung.

Mit dem erfindungsgemässen Verfahren ist es möglich, die Regelelektronik im Labor weitgehend für die spezifischen Betriebsbedingungen des Dieselmotors, betriebsbereit einzustellen. Beispielsweise bei einem Gross-Dieselmotor kann man sich dann darauf beschränken, die mit dem Simulator gefundene Einstellung in einem kurzen Testlauf zu überprüfen und - wenn überhaupt nötig - eventuelle Feinkorrekturen vorzunehmen, was gegenüber dem bisherigen Einstellverfahren beträchtliche Zeit- und Kosteneinsparungen ermöglicht. Darüberhinaus erlaubt es das Verfahren, verschiedenste Einstellungen des dynamischen Laufverhaltens eines Dieselmotors zu erproben und aus mehreren Einstellmöglichkeiten die im Einzelfall bestgeeignete auszuwählen, was aus Kosten- und Zeitgründen nach dem bisherigen Einstellverfahren kaum möglich war.

Das Verfahren ist sowohl für 4-Takt-, wie auch für 2-Takt-Dieselmotoren geeignet, wobei eine Simulatorvorrichtung mit Vorteil auf beide Taktarten umschaltbar gebaut ist. Die Simulation des Drehmomentverlaufs des Motors mit Hilfe des Drehmomentverlaufs der einzelnen Zylinder, bietet besonders vielseitige Möglichkeiten des Einstell-Verfahrens. Indem der Drehmomentverlauf einzelner Zylinder verändert wird, kann beispielsweise das Verhalten des Dieselmotors bei Leistungsabfall oder gänzlichem Ausfall eines oder mehrerer Zylinder überprüft werden.

Das Verfahren bietet auch Vorteile in der Ausbildung von Personal am Dieselmotor, indem es nun möglich ist, das Einstellen des dynamischen Verhaltens des Motors, d.h. des elektronischen Reglers am Simulator zu üben und am Simulator weitgehend zu erproben, ohne dass dafür ein Motor selbst zur Verfügung stehen muss. Darüberhinaus kann mit dem Simulationsverfahren eine Vielzahl von Betriebszuständen und deren Auswirkung auf das dynamische Drehzahl- und Betriebsverhalten am simulierten Motor erprobt und gelehrt werden, wie es in der nun möglichen Vielfalt beispielsweise an Grossdieselmotoren aus Kosten- und Zeitgründen gar nicht möglich ist. Damit wird es möglich, Personal zu bedeutend niedrigeren Kosten vielseitiger auszubilden.

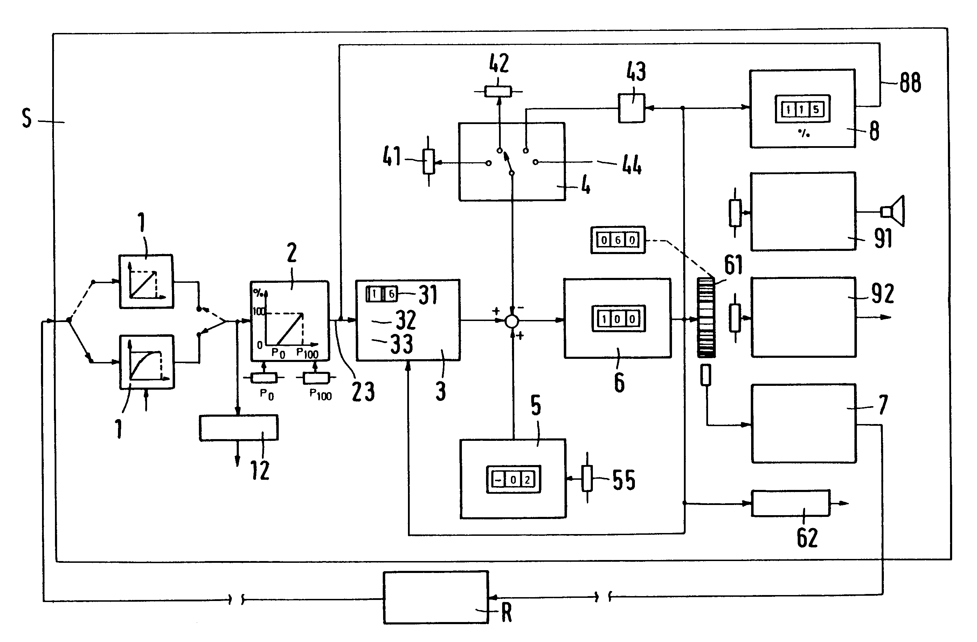

Nachstehend werden das erfindungsgemässe Verfahren, der Simulator zum Durchführen des Verfahrens sowie dessen Funktionsweise anhand der einzigen Figur erläutert, welche das Blockschema eines Beispiels eines Simulators für die Durchführung des Verfahrens zeigt. Der elektronische Regler des Dieselmotors ist mit dem Kasten R und der Simulator des Dieselmotors mit dem Kasten S dargestellt. Regler für Dieselmotoren werden beispielsweise von der Firma Woodward Governors Co. im Handel angeboten.

Der Simulator S ist aus mehreren Funktionsgruppen oder Blöcken gebildet, deren Aufbau und wo möglich mechanisches Aequivalent der Signale am Dieselmotor im folgenden beschrieben wird.

Die Blöcke 1 und $1'$ sind parallel geschaltete Eingangsstufen. Die Eingangsstufe 1 ist im gezeigten Beispiel ein Spannungtreiber mit einem Verstärkungsfaktor 1 und die Eingangsstufe $1'$ weist ein Verzögerungsglied sowie einen Strom-Spannungswandler als Treiberstufe auf. Je nach Typ des verwendeten elektronischen Reglers, wird der Ausgang des Reglers an die eine oder andere Eingangsstufe angeschlossen. Mit Vorteil ist das Ausgangssignal dieser beiden Eingangsstufen 1, $1'$ normiert, in unserem Falle beispielsweise auf 10 Volt. Dieser normierte Signalbereich von z.B. 0 bis 10 Volt entspricht beim Dieselmotor dem Bewegungsbereich der Stellglieder für die Einspritzpumpen, oder wo nur eine vorhanden ist, der Einspritzpumpe.

Block 2 ist ein Spannungs/Spannungswandler und simuliert, d.h. entspricht mechanisch der Einspritzpumpeneinstellung. Insbesondere wird durch die Ausgangsspannung dieses Wandlers 2 das der Einspritzmenge entsprechende, maximale in jedem Zylinder des Dieselmotors erzeugte Drehmoment P simuliert. Im Dieselmotorenbau spricht man häufig von MEDT (Maximum Engin Developed Torque). In unserem Beispiel entspricht ein Ausgangssignal von 10 Volt der Eingangsstufe 1 oder $1'$ 100 % maximales Drehmoment, d.h. $P_{100\%}$. Bei einem entsprechend kleineren Ausgangssignal des Wandlers 2, d.h. mechanisch einer kleineren Einspritzmenge und entsprechend anderer Stellung der Stellglieder ist das Drehmoment entsprechend kleiner und $P_{0\%}$ entspricht dem Drehmoment beim Einsetzten der Zündung, d.h. beim Einspritzen der für die Selbstzündung notwendigen, minimalen Treibstoffmenge.

In Block 3 besteht im wesentlichen aus Sägezahngeneratoren oder einem einzigen Sägezahngenerator, dessen bzw. deren maximale Signalamplitude durch das Ausgangssignal MEDT von Block 2 bestimmt wird. Das Sägezahnsignal entspricht dem Drehmomentverlauf jedes Zylinders in Abhängigkeit vom Drehwinkel der Kurbelwelle. Von aussen wählbar ist am Mehrfachschalter 31 die Zahl der Zylinder des zu simulierenden Motors, am Kippschalter 32 die Taktart des Motors, d.h. Zwei- oder Viertakt und zusätzlich besteht im gezeigten Beispiel die Möglichkeit mit einem Schalter 33, einen Zylinder des Motors wegzuschalten, d.h. dessen Ausfall zu simulieren. Es könnte auch vorgesehen sein,am Simulator mehrere Zylinder auszuschalten und/oder den oder die Zylinder nicht vollständig abzuschalten, sondern bei einzelnen Zylindern lediglich einen Leistungsabfall zu simulieren. Elektronisch wäre dies z.B. mit einer Reduktion des MEDT-Signals für einzelne Zylinder erreichbar. Die Grösse des MEDT-Signals bestimmt also die maximale Amplitude der Sägezahnsignale. Die Wahl der Taktart bestimmt die Frequenz der Sägezahnsignale. Die Zahl der Zylinder des zu simulierenden Motors kann zwischen eins und beispielsweise vierundzwanzig oder auch einer anderen Zylinderzahl gewählt werden und bestimmt beispielsweise die Phasenverschiebung der Sägezahnsignale, aus deren Superposition sich der Drehmomentverlauf des zu simulierenden Dieselmotors darstellt. Um den Drehmomentverlauf eines Dieselmotors möglichst wirklichkeitsgetreu darzustellen, kann vorgesehen sein, dass das Drehmoment zwischen den einzelnen Zylinder und/oder von Zündung zu Zündung um einen gewissen Betrag, beispielsweise ± 10 %, einstellbar verändert werden kann oder sich automatisch verändert, indem die maximale Amplitude der Sägezahnsignale, z.B. von einem Zufallsgenerator gesteuert, innerhalb gewisser Grenzen variiert wird.

Block 4 erzeugt ein Signal, das dem Lastdrehmoment am Dieselmotor entspricht, wobei diese Last im wesentlichen durch ein normiertes Spannungssignal dargestellt wird. Beispielsweise wird die 100 %-Last durch ein 10-Volt-Signal dargestellt. Das Anlaufverhalten für den Dieselmotor wird beispielsweise mit dem Zuschalten von zuerst einer Teillast 41 und nach einer gewissen Zeit der Vollast 42 simuliert. Es besteht zusätzlich noch die Möglichkeit, über weitere Eingangskanäle andere einsatzspezifische Lasten und Lastverläufe zu simulieren, wie z.B. den zeitlichen Lastverlauf eines Verstellpropellers mit einer $ALPHAn^2$-Charakteristik am Kanal 43, wobei ALPHA auf 1 normiert sein kann und n die Tourenzahl bedeutet. Der Kanal 44 bietet die Möglichkeit, irgend eine andere Last mit einem Lastverlaufgenerator zu simulieren.

3

Block 5 ist eine Schaltung für die Simulation von Torsionsschwingungen einer bestimmten Ordnung. Es handelt sich im wesentlichen um einen Sinus-Generator, der mit der Drehzahl des simulierten Dieselmotors synchronisiert ist. Es ist noch zu beachten, dass die Torsionsschwingungen erster und n-ter Ordnung (n = Zylinderzahl) sich auch direkt aus der Schaltung von Block 5 ableiten lassen.

Bei Block 6 wird die Drehzahl, d.h. das Drehzahlsignal des simulierten Dieselmotors erzeugt. Es handelt es sich dabei in wesentlichen um einen Integrator, bei dem das aus Dieselmotor und Lasten resultierende Drehmoment, d.h. das Drehmomentsignal über die Zeit integriert wird und zwar nach der Beziehung:

$$N_{eng} = \frac{30}{\pi \cdot J} \int_0^t (M_{eng} - M_{load})\, dt + N_{eng}\ (t=0)$$

wobei

| | |
|---|---|
| $N_{eng}$ | die Drehzahl des Dieselmotors |
| $M_{eng}$ | das vom Dieselmotor erzeugte Drehmoment |
| $N_{eng}\ (t=0)$ | die Drehzahl des Dieselmotors in Zeitpunkt $t = 0$ in U/min |
| $M_{load}$ | das von der Last und den Störungen erzeugte Drehmoment |
| $J$ | das gesamte Massenträgheitsmoment |

bedeuten.

Da der Simulator mit normierten Werten und Grössen arbeitet, ist es notwendig, das Massenträgheitsmoment J durch die Eingabe des normierten Signals GAMMA, des sogenannten Beschleunigungsfaktors, einer für jeden Dieselmotor spezifischen Grösse, die sich nach der Beziehung

$$GAMMA\ (\%\ N_{100}/sec) = \frac{9 \times 10^6 \times P_{eng}\ (KW)}{N^2_{eng}\ (RPM) \times J\ (kgm^2)}$$

berechnet, wobei

| | |
|---|---|
| GAMMA | der Beschleunigungsfaktor in Prozent der Nenndrehzahl |
| $N_{100}$ | 100 % der Nenndrehzahl = Nenndrehzahl |
| $P_{eng}$ | 100 % der Nennleistung des Dieselmotors |
| $J$ | das gesamte Massenträgheitsmoment |

bedeuten.

Das Ausgangssignal von Block 6 ist mit dem gezahnten Schwungrad 61 symbolisiert und ist beim Simulator eine Spannung, deren Grösse die Drehzahl darstellt. Der Regler R braucht als Eingangssignal für die Drehzahl beispielsweise eine Frequenz. Diese der Drehzahl entsprechende Frequenz wird im Block 7, welche einen Spannungs/Frequenzwandler umfasst erzeugt und dem Regler R zugeführt.

Bei Block 8 handelt es sich um einen Drehzahlbegrenzer, der das Abstellen des Motors bewirken muss, wenn eine einstellbare Höchstdrehzahl erreicht wird. Bei einer Drehzahl von z.B. 115 % der Nenndrehzahl würde dies bei unserem Simulatorbeispiel bedeuten, dass der Abschaltvorgang ausgelöst wird, wenn die Ausgangsspannung von Block 6 11.5 Volt erreicht. Block 8 ist also beispielsweise ein Spannungs-Schwellwertschalter. Das Stoppsignal dieses Drehzahlbegrenzers 8 wird über die Leitung 88 einem in der Verbindungsleitung 23 von Block 2, (welcher die Einspritzpumpe simuliert) und Block 3 liegenden Schalter zugeführt führt zum sofortigen Abstellen des simulierten Dieselmotors, wenn der Simulator Überdrehzahl simuliert.

Der Simulator kann noch eine Anzeige 12 für die simulierten Stellung des Einspritzpumpen-Gestänges oder eine Anzeige 62 für die Drehzahl aber auch Anzeigen für andere Grössen aufweisen, die für bestimmte Zwecke von Interesse sind. Mit dem Geräuschgenerator 91 kann ein dem Lauf des Dieselmotors

4

entsprechendes Geräusch erzeugt werden, was die Simulation noch wirklichkeitsnäher erscheinen lässt. Der Frequenzgenerator 92 erlaubt beispielsweise die Erzeugung von irgendwelchen Frequenzen, die zu einer bestimmten Grösse des im Simulator dargestellten Dieselmotors, z.B. zu dessen Leistung in Beziehung stehen.

Die durch die einzelnen Blöcke dargestellten Schaltungen und Schaltelementen sind dem Elektronikfachmann bekannt und geläufig und sind zudem in der Literatur hinreichend beschrieben. Er ist auch in der Lage, aufgrund seiner beruflichen Kenntnisse und anhand der vorstehenden Erklärungen zum Blockschema die Anpassung der genannten Schaltungs-Module aneinander und deren Dimensionierung vorzunehmen, d.h. eine Vorrichtung zur Durchführung des Verfahrens anzufertigen und das Verfahren auszuüben.

## Patentansprüche

1. Verfahren zum Einstellen des dynamischen Laufverhaltens eines einen elektronischen Drehzahlregler (R) enthaltenden Dieselmotors durch die Regelung der Einspritzmenge der Kraftstoff-Einspritzpumpe dadurch **gekennzeichnet,** dass zum Einstellen des elektronischen Drehzahlreglers (R) dieser an eine elektronische Simulationsschaltung (S) mit Eingabe- und Ausgabekanälen angeschlossen wird, welche das Laufverhalten des Dieselmotors in Form von elektrischen Signalen simuliert, wobei über Eingabek-anäle (1, 1′, 41, 42, 43, 44, 55) charakteristische, den Lastwechseln und Störungen entsprechende elektrische Signale sowie die Reglersignale für die Einstellung der Kraftstoff-Einspritzpumpe eingegeben werden und über einen Ausgangskanal (7) der Schaltung der Drehzahl des in der elektronischen Schaltung simulierten Dieselmotors entsprechende elektrische Signale an den Drehzahlregler (R) ausgegeben werden, wobei die Simulationsschaltung (S) mit dem elektronischen Drehzahlregler (R) einen geschlossenen Regelkreis bildet, und dass der derart mit dem Simulator (S) eingestellte elektronische Drehzahlregler (R) an den Dieselmotor angeschlossen wird.

2. Verfahren nach Anspruch 1, dadurch gekennzeichnet, dass das von der Simulationsschaltung (S) erzeugte Signal (3) für den Dieselmotor aus der Summe der Simulationssignale für den Drehmomentverlauf jedes einzelnen Zylinders gebildet wird.

3. Verfahren nach einem der Ansprüche 1 oder 2, dadurch gekennzeichnet, dass das simulierte maximale Drehmoment der Simulationsschaltung des Dieselmotors von einem die Charakteristik der Brennstoffeinspritzpumpe simulierenden Schaltkreis (2) bestimmt wird, dessen Ausgangssignal sich in Abhängigkeit vom Ausgangssignal des Drehzahlreglers (R) verändert.

4. Verfahren nach einem der Ansprüche 1 bis 3, dadurch gekennzeichnet, dass die Simulationssignale für den Drehmomentverlauf einzelner Zylinder im Simulationsbetrieb verändert (33) werden können.

5. Verfahren nach einem der Ansprüche 1 bis 4, dadurch gekennzeichnet, dass dem von der Simulationsschaltung erzeugten Signal des Drehmoments des Dieselmotors Störsignale (5), welche Torsionsschwingungen verschiedener Ordnungen der Welle entsprechen, zugeschaltet werden.

6. Verfahren nach einem der Ansprüche 1 bis 5, dadurch gekennzeichnet, dass die Zahl der Zylinder (31) und/oder der Takt (32) des zu simulierenden Dieselmotors verändert werden kann.

7. Dieselmotor-Simulationsvorrichtung zum Durchführen des Verfahrens nach Anspruch 1, dadurch gekennzeichnet, dass als Eingangsstufe (1, 1′) für die Regelsignale des Drehzahlreglers (R) eine Spannungs- (1) oder Strom-Leistungsstufe (1′) vorhanden ist, welche der Einspritzpumpen-Simulationsschaltung (2) vorgeschaltet ist, deren Ausgangssignale der Dieselmotor-Simulationsschaltung (3, 6) zugeführt werden und welche die Grösse von deren simuliertem Drehmoment-Signal bestimmen, und dass einstellbare Drehmoment-Lastsimulationsschaltkreise (4, 41, 42, 43, 5) vorhanden sind, deren Signale den Ausgangssignalen der Dieselmotor-Simulationsschaltung (3, 6) zugeschaltet sind, und dass eine Wandlerschaltung (7) vorhanden ist, der das resultierende aus Dieselmotor-, Last- und Störungs-Drehmoment bestimmte und simulierte Drehzahl-Signal zugeführt wird und welche das Signal als Eingangssignal für den Drehzahlregler (R) aufbereitet.

8. Vorrichtung nach Anspruch 7, dadurch gekennzeichnet, dass die Dieselmotor-Simulatorschaltung Sägezahn-Generatoren (3) für die Simulation des von den Zylindern erzeugten Drehmoments aufweist.

**9.** Vorrichtung nach Anspruch 7 oder 8, dadurch gekennzeichnet, dass das dem Wandler (7) zugeführte Drehzahlsignal das Signal eines Integrators (6) ist, welches sich aus den Drehmomenten des simulierten Dieselmotors sowie der simulierten Lasten und Störungen und aus den gesamten Massenträgheitsmoment nach der Beziehung

$$N_{eng} = \frac{30}{\pi \cdot J} \int_0^t (M_{eng} - M_{load})\, dt + N_{eng}\,(t=0)$$

ergibt, wobei

| | |
|---|---|
| $N_{eng}$ | die Drehzahl des Dieselmotors |
| $M_{eng}$ | das vom Dieselmotor erzeugte Drehmoment |
| $N_{eng}\,(t=0)$ | die Drehzahl des Dieselmotors in Zeitpunkt $t=0$ im U/mm |
| $M_{load}$ | das von der Last und den Störungen erzeugte Drehmoment |
| $J$ | das gesamte Massenträgheitsmoment |

bedeuten.

**10.** Vorrichtung nach Anspruch 9, dadurch gekennzeichnet, dass der Integrator (6) einen Normierungs-Signaleingang aufweist, über welchen das Massenträgheitsmoment nach Massgabe der Beziehung

$$GAMMA\ (\%\ N_{100/sec}) = \frac{9 \times 10^6 \times P_{eng}\ (KW)}{N_{eng}^2\ (RPM) \times J\ (kgm^2)}$$

normiert wird, wobei

| | |
|---|---|
| GAMMA | der Beschleunigungsfaktor in Prozent der Nenndrehzahl |
| $N_{100}$ | 100 % der Nenndrehzahl |
| $P_{eng}$ | 100 % der Nennleistung des Dieselmotors |
| $J$ | das gesamte Massenträgheitsmoment |

bedeuten.

**11.** Vorrichtung nach einem der Ansprüche 7 bis 10, dadurch gekennzeichnet, dass der Wandler (7) ein Spannung/Frequenzwandler ist.

**12.** Vorrichtung nach einem der Ansprüche 7 bis 11, dadurch gekennzeichnet, dass ein Schwellwertschalter als Drehzahlbegrenzungsschaltung (8) vorhanden ist, welche ein Abstellsignal für den simulierten Dieselmotor erzeugt, wenn die simulierte Drehzahl des Dieselmotors einen einstellbaren, höchstzulässigen Wert erreicht.

**13.** Vorrichtung nach einem der Ansprüche 7 bis 12, dadurch gekennzeichnet, dass die Dieselmotor-Simulationsschaltkreise Einstellorgane für die Wahl der Zylinderzahl (31) und des Takts (32) des zu simulierenden Dieselmotors aufweisen.

**14.** Vorrichtung nach einem der Ansprüche 7 bis 13, dadurch gekennzeichnet, dass das Ausgangssignal des Schaltkreises (4), der das Last-Drehmoment simuliert über ein Schaltorgan veränderbar ist.

**Claims**

1. A method of adjusting the dynamic running characteristics of a diesel engine containing an electronic speed governor, by controlling the amount of fuel injected by the fuel injection pump, characterised in that for the purpose of adjusting the electronic speed governor (R) it is connected to an electronic simulator circuit (S) with input and output channels, the said simulator circuit simulating the running characteristics of the diesel engine in the form of electrical signals, characteristic electrical signals which correspond to the load variations and disturbances, and the governor signals for adjusting the fuel injection pump, being input via input channels (1, 1', 41, 42, 43, 44, 55), and electrical signals which correspond to the speed of the diesel engine simulated in the electronic circuit being output to the speed governor (R) via an output channel (7) of the circuit, the simulation circuit (S) together with the electronic speed governor (R) forming a closed control circuit, and the electronic speed governor (R) thus adjusted by means of the simulator (S) is connected to the diesel engine.

2. A method according to claim 1, characterised in that the signal (3) for the diesel engine as generated by the simulator circuit (S) is formed from the sum of the simulation signals for the torque curve of each individual cylinder.

3. A method according to claim 1 or 2, characterised in that the simulated maximum torque of the diesel engine simulation circuit is determined by a circuit (2) which simulates the characteristic of the fuel injection pump and the output signal of which changes in dependence on the output signal of the speed governor (R).

4. A method according to any one of claims 1 to 3, characterised in that the simulation signals for the torque curve of individual cylinders can be varied (33) during simulator operation.

5. A method according to any one of claims 1 to 4, characterised in that malfunction signals (5) corresponding to shaft torsional vibrations of different orders can be added to the diesel engine torque signal generated by the simulation circuit.

6. A method according to any one of claims 1 to 5, characterised in that the number of cylinders (31) and/or the cycle (32) of the simulated diesel engine can be varied.

7. A diesel engine simulator for performing the method according to claim 1, characterised in that the input stage (1, 1') for the control signals for the speed governor (R) is a voltage output stage (1) or a current output stage (1') which precedes the injection pump simulation circuit (2), the output signals of which are fed to the diesel engine simulator circuit (3, 6), and which determine the magnitude of the simulated torque signal thereof, and adjustable torque-load simulation circuits (4, 41, 42, 43, 5) are provided, the signals of which are superimposed on the output signals of the diesel engine simulation circuit (3, 6), and a converter circuit (7) is provided to which there is fed the resultant simulated speed signal determined from the diesel engine load and disturbance torque, and which processes the signal as an input signal for the speed governor (R).

8. A device according to claim 7, characterised in that the diesel engine simulator circuit has saw-tooth generators (3) for the simulation of the torque generated by the cylinders.

9. Apparatus according to claim 7 or 8, characterised in that the speed signal fed to the converter (7) is the signal of an integrator (6) obtained from the torques of the simulated diesel engine and of the simulated loads and disturbances and from the total moment of mass inertia in accordance with the equation:

$$N_{eng} = \frac{30}{\pi \cdot J} \int_0^t (M_{eng} - M_{load})\, dt \; + \; N_{eng}\,(t=0)$$

where

$N_{eng}$    is the diesel engine speed

$M_{eng}$    is the torque developed by the diesel engine

$N_{eng}$    $(t=0)$ is the diesel engine speed at the time $t=0$, in rpm

$M_{load}$    is the torque generated by the load and the disturbances or malfunctions

$J$    is the total moment of mass inertia

10. Apparatus according to claim 9, characterised in that the integrator (6) comprises a standardization signal input, by means of which the moment of mass inertia is standardized in accordance with the equation:

$$GAMMA\ (\%\ N_{100/sec}) = \frac{9 \times 10^6 \times P_{eng}\ (KW)}{N^2_{eng}(RPM) \times J\ (kgm^2)}$$

where

GAMMA    is the acceleration factor as a percentage of the nominal speed

$N_{100}$    is 100% of the nominal speed

$P_{ong}$    is 100% of the nominal power of the diesel engine

$J$    is the total moment of mass inertia.

11. Apparatus according to any one of claims 7 to 10, characterised in that the converter (7) is a voltage/frequency converter.

12. Apparatus according to any one of claims 7 to 11, characterised in that a threshold switch is provided as speed limiting circuit (8), and generates a shut-off signal for the simulated diesel engine when the simulated diesel engine speed reaches an adjustable maximum permissible value.

13. Apparatus according to any one of claims 7 to 12, characterised in that the diesel engine simulation circuits comprise adjusting means for selecting the number of cylinders (31) and the cycle (32) of the simulated diesel engine.

14. Apparatus according to any one of claims 7 to 13, characterised in that the output signal of the circuit (4) which simulates the load torque is variable by means of a switching element.

**Revendications**

1. Procédé de réglage du comportement dynamique de fonctionnement d'un moteur diesel comprenant un régulateur électronique (R) de vitesse, par la régulation de la quantité de carburant injecté par la pompe d'injection de carburant, caractérisé en ce que pour le réglage du régulateur électronique (R) de vitesse, ce dernier est raccordé à un circuit (S) de simulation électronique, comprenant des canaux d'entrée et de sortie, qui simule le comportement de fonctionnement du moteur diesel sous forme de signaux électriques, des signaux électriques caractéristiques, correspondant aux changements de charge et aux incidents de fonctionnement, ainsi que les signaux du régulateur commandant le réglage de la pompe d'injection, étant entrés par l'intermédiaire des canaux d'entrée (1, 1', 41, 42, 43, 44, 55), et des signaux électriques correspondant à la vitesse de rotation du moteur diesel simulé par le circuit électronique étant délivrés au régulateur (R) de vitesse par l'intermédiaire d'un canal de sortie (7) du circuit, le circuit (S) de simulation formant un circuit de régulation fermé avec le régulateur électronique (R) de vitesse, et en ce que le régulateur électronique (R) de vitesse ainsi ajusté à l'aide du simulateur (S) est raccordé au moteur diesel.

2. Procédé selon la revendication 1, caractérisé en ce que le signal (3) du moteur diesel généré par le circuit (S) de simulation est formé par la somme des signaux de simulation d'allure du couple de chacun des cylindres individuels.

3. Procédé selon l'une des revendications 1 ou 2, caractérisé en ce que le couple maximal simulé par le circuit de simulation du moteur diesel est déterminé par un circuit (2) de commande simulant la caractéristique de la pompe d'injection de carburant, circuit dont le signal de sortie change en fonction du signal de sortie du régulateur (R) de vitesse.

4. Procédé selon l'une des revendications 1 à 3, caractérisé en ce que les signaux de simulation d'allure du couple de cylindres individuels peuvent être modifiés (33) pendant le fonctionnement de simulation.

5. Procédé selon l'une des revendications 1 à 4, caractérisé en ce que l'on introduit au niveau du signal de couple du moteur diesel, généré par le circuit de simulation, des signaux perturbateurs (5) correspondant à des vibrations de torsion de différents ordres de l'arbre.

6. Procédé selon l'une des revendications 1 à 5, caractérisé en ce que le nombre de cylindres (31) et/ou le cycle (32) du moteur diesel à simuler peuvent être modifiés.

7. Dispositif de simulation d'un moteur diesel, permettant la mise en oeuvre du procédé selon la revendication 1, caractérisé en ce qu'il existe un étage de puissance de tension (1) ou de courant (1'), servant d'étage d'entrée (1, 1') pour les signaux de régulation du régulateur (R) de vitesse, cet étage étant raccordé en amont du circuit (2) de simulation de la pompe d'injection, dont les signaux de sortie sont acheminés vers le circuit (3, 6) de simulation du moteur diesel et déterminent l'amplitude du signal de couple simulé par le circuit, et en ce que des circuits (4, 41, 42, 43, 5) de simulation du couple et de la charge existent, dont les signaux de sortie sont introduits au niveau du circuit (3, 6) de simulation du moteur diesel, et en ce qu'un circuit convertisseur (7) existe, vers lequel est acheminé le signal de vitesse simulé résultant déterminé par les couples du moteur diesel, de la charge et des incidents, ce circuit préparant ce signal comme signal d'entrée pour le régulateur (R) de vitesse.

8. Dispositif selon la revendication 7, caractérisé en ce que le circuit de simulation du moteur diesel comporte des générateurs (3) d'impulsions en dents de scie pour la simulation du couple développé par les cylindres.

9. Dispositif selon l'une des revendications 7 ou 8, caractérisé en ce que le signal de vitesse de rotation acheminé vers le convertisseur (7) est un signal fourni par un intégrateur (6), ce signal étant obtenu à partir des couples du moteur diesel simulé ainsi que des charges et incidents simulés, et du moment d'inertie de masse total, selon la relation

$$N_{eng} = \frac{30}{\pi \cdot J} \int_0^t (M_{eng} - M_{load})\ dt + N_{eng}\ (t=0)$$

où:

N_{eng}     signifie la vitesse de rotation du moteur diesel
$N_{eng}$     signifie la vitesse de rotation du moteur diesel
$M_{eng}$     signifie le couple développé par le moteur diesel
$N_{eng}\ (t=0)$     signifie la vitesse de rotation du moteur diesel au moment t = 0, en tr/min
$M_{load}$     signifie le couple développé par la charge et par les incidents
J     signifie le moment d'inertie de masse total.

**10.** Dispositif selon la revendication 9, caractérisé en ce que l'intégrateur (6) comporte une entrée de signal de normalisation, par l'intermédiaire de laquelle le moment d'inertie de masse total est normalisé selon la relation

$$GAMMA \ (\%N_{100/sec}) \ = \ \frac{9 \cdot 10^6 \cdot P_{eng} \ (kW)}{N^2_{eng} \ (tr/min) \cdot J \ (kgm^2)}$$

où:

| | |
|---|---|
| GAMMA | signifie le facteur d'accélération en pour cent de la vitesse de rotation nominale |
| $N_{100}$ | signifie 100 % de la vitesse de rotation nominale |
| $P_{eng}$ | signifie 100 % de la puissance nominale du moteur diesel |
| J | signifie le moment d'inertie de masse total. |

**11.** Dispositif selon l'une des revendications 7 à 10, caractérisé en ce que le convertisseur (7) est un convertisseur de tension/fréquence.

**12.** Dispositif selon l'une des revendications 7 à 11, caractérisé en ce qu'il comporte comme commutateur à valeur seuil un circuit (8) de limitation de la vitesse de rotation qui produit un signal d'arrêt du moteur diesel simulé lorsque la vitesse simulée du moteur diesel atteint une valeur admissible maximale réglable.

**13.** Dispositif selon l'une des revendications 7 à 12, caractérisé en ce que les circuits de simulation du moteur diesel comportent des organes de réglage permettant la sélection du nombre de cylindres (31) et du type de cycle (32) du moteur diesel à simuler.

**14.** Dispositif selon l'une des revendications 7 à 13, caractérisé en ce que le signal de sortie du circuit (4) de commande, qui simule le couple de charge, peut varier sous l'action d'un organe de commande.

S

EP 0 285 556 B1

11